# EUROPEAN PATENT SPECIFICATION

(11) **EP 3 007 504 B1**
(45) Date of publication and mention of the grant of the patent: **01.11.2017**
(21) Application number: 13885181.1
(22) Date of filing: 27.12.2013
(51) Int. Cl.: H04W 72/12

(54) **RESOURCE SCHEDULING METHOD AND APPARATUS**
RESSOURCENPLANUNGSVERFAHREN UND -VORRICHTUNG
PROCÉDÉ ET APPAREIL DE PROGRAMMATION DE RESSOURCES

(30) Priority: 24.05.2013 CN 201310198863
(43) Date of publication of application: 13.04.2016
(73) Proprietor: ZTE Corporation, Shenzhen, Guangdong 518057 (CN)
(72) Inventor: XU, Qianqian, Shenzhen Guangdong 518057 (CN)
(74) Representative: Lavoix
(86) International application number: PCT/CN2013/090782
(87) International publication number: WO 2014/187139

(56) References cited:
- WO-A1-2010/135720
- CN-A- 101 521 942
- CN-A- 101 917 770
- CN-A- 102 655 681
- US-A1- 2002 041 566
- US-A1- 2011 092 235

## Description

### TECHNICAL FIELD

The disclosure relates to scheduling technology in the field of mobile communications, and in particular to a method and an apparatus for scheduling resources.

### BACKGROUND

At present, the scheduling in a Long Term Evolution (LTE) system includes: calculating a priority of each User Equipment (UE) according to a scheduling algorithm; sorting the UEs according to the priorities of the UEs, and allocating a resource for each UE in order of priorities.

However, the calculation of the priority in the above scheduling method mainly uses a channel quality, a historical throughput, a service attribute and other parameters of the UE. The interference of user is not taken into account during the calculation of the priority. Accordingly, the scheduling method in the prior art cannot guarantee the service rate, especially, the service efficiency for the UE at a cell edge.

In addition, the document WO 2010/135720 A1 relates to adapting the scheduling priority of logical channels and is intended to provide distributed scheduling employing consistent prioritization mechanisms and across Femto cells to facilitate interference management. To this end, this document provides one of technical solutions for performing scheduling in the uplink in which the serving base station configures and re-configures the priority metric and the prioritized bit rate for at least one of the one or more logical channel groups of the UE.

### SUMMARY

In view of this, the disclosure is intended to provide a method and an apparatus for scheduling resources, which can reduce the influence on the scheduling of the UE by cell interference, especially improve the service efficiency for the UE at the edge of a cell, improve the spectrum efficiency and throughput of the cell, and improve the user experience to the greatest extent.

The disclosure provides a method for scheduling resources, which includes that:
an interference factor of each UE in a scheduling queue of a current subframe is calculated by using an interference factor mapping rule;
a priority corresponding to each UE in the scheduling queue of the current subframe is calculated by using the interference factor of each UE; and
the resources are allocated for each UE according to the priority corresponding to each UE in the scheduling queue of the current subframe.

In the above solution, before the interference factor of each UE in the scheduling queue of the current subframe is calculated by using the interference factor mapping rule, the method also includes that: the scheduling queue of the current subframe is set up by using UEs required to be scheduled in the current subframe.

In the above solution, the UEs required to be scheduled are:
all of UEs within a coverage area of a base station; or,
specified UEs scheduled on the ABS, and/or all of UEs within the coverage area of the base station if an Enhanced Inter-Cell Interference Coordination (eICIC) technology is used and the current subframe is an Almost Blank Subframe (ABS); or,
all of UEs within the coverage area of the base station except specified UEs scheduled on the ABS if the eICIC technology is used and the current subframe is a non-ABS.

In the above solution, the step of calculating the interference factor of each UE in the scheduling queue of the current subframe by using the interference factor mapping rule includes that:
each UE in the scheduling queue of the current subframe is extracted, and the interference factor of each UE is extracted from the interference factor mapping rule according to a difference between quality information of each UE in the current subframe and selected quality information of each UE in schedulable subframes except the current subframe.

In the above solution, the schedulable subframes except the current subframe are:
all the other ABSs except the current subframe when the UE is a specified UE scheduled on the ABS;
all the other subframes except the current subframe when the UE is not the specified UE scheduled on the ABS.

In the above solution, the interference factor mapping rule includes: one or more ranges of a Block Error Ratio (BLER) difference, and one or more interference factors respectively corresponding to the one or more ranges of the BLER difference; or,
one or more ranges of a packet loss ratio difference, and one or more interference factors respectively corresponding to the one or more ranges of the packet loss ratio difference; or,
one or more ranges of an interference measurement difference, and one or more interference factors respectively corresponding to the one or more ranges of the interference measurement difference.

In the above solution, the step of calculating the priority corresponding to each UE in the scheduling queue of the current subframe by using the interference factor of each UE includes that:
performing calculation by using an original priority of each UE in the scheduling queue of the current subframe and the interference factor of each UE to obtain the priority corresponding to each UE.

The disclosure also provides an apparatus for scheduling resources, which includes: an interference factor calculating module, a priority calculating module and a scheduling module, wherein,
the interference factor calculating module is configured to calculate the interference factor of each UE in the scheduling queue of the current subframe by using the interference factor mapping rule, and send the interference factor of each UE in the scheduling queue of the current subframe to the priority calculating module;
the priority calculating module is configured to calculate the priority corresponding to each UE in the scheduling queue of the current subframe by using the interference factor of each UE which is sent from the interference factor calculating module, and send the priority corresponding to each UE in the scheduling queue of the current subframe to the scheduling module; and
the scheduling module is configured to allocate the resources for each UE according to the priority corresponding to each UE in the scheduling queue of the current subframe which is sent from the priority calculating module.

In the above solution, the interference factor calculating module is configured to set up the scheduling queue of the current subframe by using UEs required to be scheduled in the current subframe;
wherein the UEs required to be scheduled are all of UEs within the coverage area of the base station; or,
if the eICIC technology is used and the current subframe is an ABS, then the UEs required to be scheduled are specified UEs scheduled on the ABS, and/or all of UEs within the coverage area of the base station; or,
if the eICIC technology is used and the current subframe is a non-ABS, then the UEs required to be scheduled are all of UEs within the coverage area of the base station except the specified UE scheduled on the ABS.

In the above solution, the interference factor calculating module is configured to extract each UE in the scheduling queue of the current subframe, and extract the interference factor of each UE from the interference factor mapping rule according to the difference between the quality information of each UE in the current subframe and the selected quality information of each UE in schedulable subframes except the current subframe.

In the above solution, the interference factor calculating module is configured to store the interference factor mapping rule, wherein the interference factor mapping rule includes: one or more ranges of the BLER difference, and one or more interference factors respectively corresponding to the one or more ranges of the BLER difference; or
one or more ranges of the packet loss ratio difference, and one or more interference factors respectively corresponding to the one or more ranges of the packet loss ratio difference; or,
one or more ranges of the interference measurement difference, and one or more interference factors respectively corresponding to the one or more ranges of the interference measurement difference.

In the above solution, the priority calculating module is configured to perform calculation with an original priority of each UE in the scheduling queue of the current subframe and the interference factor of each UE to obtain the priority corresponding to each UE.

The method and apparatus for scheduling resources provided by the disclosure can obtain the interference factor of the UE in the current subframe according to the interference factor mapping rule, and calculate the priority of scheduling by using the interference factor. In this way, the interference on the UE can be considered during resource scheduling, and thus the influence on the scheduling by cell interference can be minimized and the service efficiency for the UE is improved while ensuring the ordering and timeliness of scheduling. For the UE at the edge of the cell which is subjected to comparatively serious interference, the addition of the interference factor in calculating the priority of scheduling can especially improve the service efficiency for the UE at the edge of the cell. Also, the spectrum efficiency and throughput of the cell are improved, and the user experience is improved to the greatest extent.

### BRIEF DESCRIPTION OF THE DRAWINGS

Fig. 1 is a flowchart of a method for scheduling resources according to an embodiment of the disclosure;
Fig. 2 is a structural diagram of an apparatus for scheduling resources according to an embodiment of the disclosure;

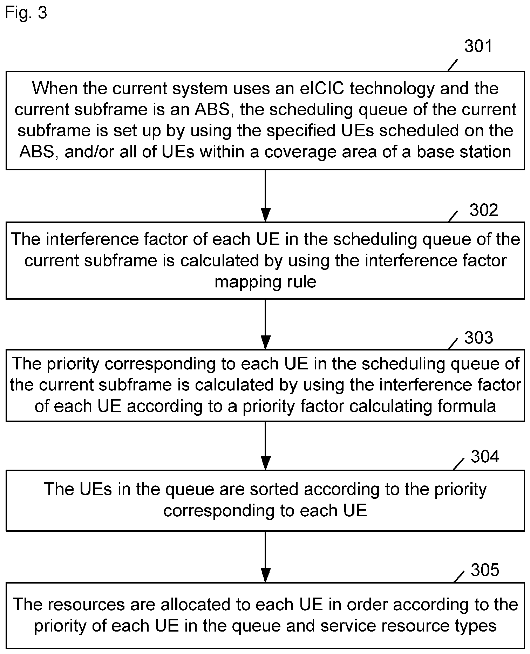

Fig. 3 is a flowchart of the method according to Embodiment 1 of the disclosure;

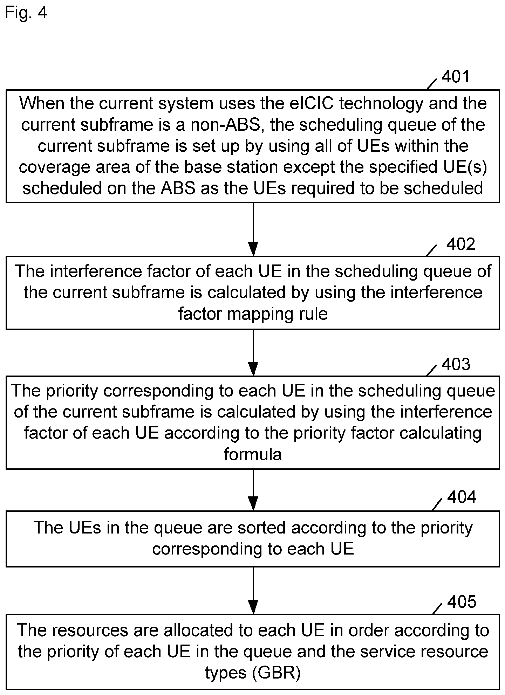

Fig. 4 is a flowchart of the method according to Embodiment 2 of the disclosure; and

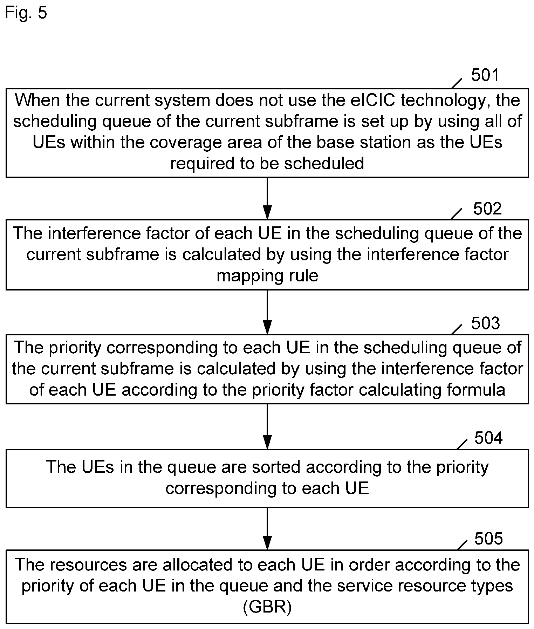

Fig. 5 is a flowchart of the method according to Embodiment 3 of the disclosure.

### DETAILED DESCRIPTION

The basic idea of the disclosure is: calculating the interference factor of each UE in the scheduling queue of the current subframe by using the interference factor mapping rule; calculating the priority corresponding to each UE in the scheduling queue of the current subframe by using the interference factor of each UE; and allocating the resources for each UE according to the priority corresponding to each UE in the scheduling queue of the current subframe.

The disclosure is described in detail below with reference to the accompanying drawings and embodiments.

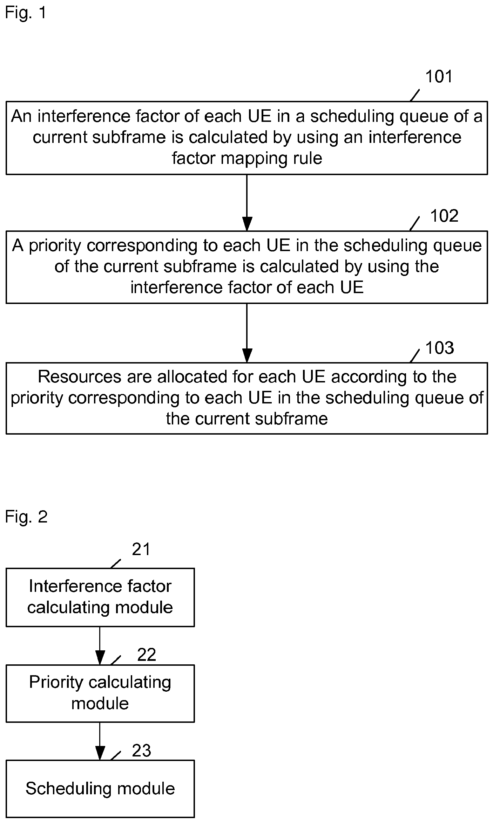

As shown in Fig. 1, the method for scheduling resources according to the disclosure includes the following steps.

Step 101: the interference factor of each UE in the scheduling queue of the current subframe is calculated by using the interference factor mapping rule.

Specifically, UEs in the scheduling queue of the current subframe are extracted one by one, and the interference factor of each UE is extracted from the interference factor mapping rule according to the difference between the quality information of each UE in the current subframe and the selected quality information of each UE in schedulable subframes except the current subframe.

Here, the quality information may include: the Block Error Ratio (BLER), the packet loss ratio and the interference measurement.

The selected quality information can be the selected minimum BLER, or the selected minimum packet loss ratio, or the selected minimum interference measurement.

The interference factor mapping rule is a table preset according to the actual situation, including: one or more ranges of the BLER difference, and one or more interference factors respectively corresponding to the ranges of the BLER difference; or,
one or more ranges of the packet loss ratio difference, and one or more interference factors respectively corresponding to the ranges of the packet loss ratio difference; or,
one or more ranges of the interference measurement difference, and one or more interference factors respectively corresponding to the ranges of the interference measurement difference.

Herein, the methods for obtaining the BLER, the packet loss ratio and the interference measurement are known in the conventional technology, and thus will not be repeated herein.

The schedulable subframes except the current subframe are: all the other ABSs except the current subframe when the UE is a specified UE scheduled on the ABS; or all the other subframes except the current subframe when the UE is not the specified UE scheduled on the ABS.

Step 102: the priority corresponding to each UE in the scheduling queue of the current subframe is calculated by using the interference factor of each UE.

Specifically, the calculation is performed with the original priority of each UE in the scheduling queue of the current subframe and the interference factor of each UE to obtain the priority corresponding to each UE.

Here, the calculation can be based on the actual situation, for example, multiplication, or addition, or addition after multiplying the interference factor by a preset factor.

The method for obtaining the original priority is known in the prior art, and thus will not be repeated herein.

Step 103: the resources are allocated for each UE according to the priority corresponding to each UE in the scheduling queue of the current subframe.

Here, the method for allocating the resources is known in the prior art and thus will not be repeated herein.

Furthermore, before Step 101 is executed, the method also includes that: the scheduling queue of the current subframe is set up by using the UEs required to be scheduled in the current subframe.

The UEs required to be scheduled are: all of UEs within a coverage area of a base station; or,
if the current accessing system uses the eICIC technology and the current subframe is an ABS, then the UEs required to be scheduled are specified UEs scheduled on the ABS, and/or all of UEs within the coverage area of the base station; or,
if the current system uses the eICIC technology and the current subframe is a non-ABS, then the UEs required to be scheduled are all of UEs within the coverage area of the base station except the specified UE(s) scheduled on the ABS.

As shown in Fig. 2, the disclosure provides an apparatus for scheduling resources, which includes: the interference factor calculating module 21, the priority calculating module 22 and the scheduling module 23.

The interference factor calculating module 21 is configured to calculate the interference factor of each UE in the scheduling queue of the current subframe by using the interference factor mapping rule, and send the interference factor of each UE in the scheduling queue of the current subframe to the priority calculating module 22.

The priority calculating module 22 is configured to calculate the priority corresponding to each UE in the scheduling queue of the current subframe by using the interference factor of each UE which is sent from the interference factor calculating module 21, and send the priority corresponding to each UE in the scheduling queue of the current subframe to the scheduling module 23.

The scheduling module 23 is configured to allocate the resources for each UE according to the priority corresponding to each UE in the scheduling queue of the current subframe which is sent from the priority calculating module 22.

The interference factor calculating module 21 is configured to set up the scheduling queue of the current subframe by using the UEs required to be scheduled in the current subframe.

The interference factor calculating module 21 is configured to, if the current system uses the eICIC technology presented by the 3GPP R10 and the current subframe is the ABS, regard the specified UEs scheduled on the ABS and/or the other UEs within the coverage area of the base station as the UEs required to be scheduled, or else, regard all the UEs within the coverage area of the base station except the specified UE(s) scheduled on the ABS as the UEs required to be scheduled, and if the current system does not use the eICIC technology, regard all the UEs within the coverage area of the base station as the UEs required to be scheduled.

The interference factor calculating module 21 is configured to extract each UE in the scheduling queue of the current subframe, and extract the interference factor of each UE from the interference factor mapping rule according to the difference between the quality information of each UE in the current subframe and the selected quality information of each UE in schedulable subframes except the current subframe.

The interference factor calculating module 21 is specifically configured to, when the UE is a specified UE scheduled on the ABS, regard all the other ABSs except the current subframe as the schedulable subframes except the current subframe, when the UE is not the specified UE scheduled on the ABS, regard all the other subframes except the current subframe as the schedulable subframes except the current subframe.

The interference factor calculating module 21 is specifically configured to store the interference factor mapping rule; wherein, the interference factor mapping rule includes: one or more ranges of the BLER difference, and the interference factors respectively corresponding to the ranges of the BLER difference; or,
one or more ranges of the packet loss ratio difference, and the interference factors respectively corresponding to the ranges of the packet loss ratio difference; or,
one or more ranges of the interference measurement difference, and the interference factors respectively corresponding to the ranges of the interference measurement difference.

The priority calculating module 22 is configured to perform calculation with the original priority of each UE in the scheduling queue of the current subframe and the interference factor of each UE to obtain the priority corresponding to each UE; the calculation can be according to the actual situation, for example, multiplication, or addition, or addition after multiplying the interference factor by a preset factor.

All of the above interference factor calculating module, the priority calculating module and the scheduling module can be implemented by a CPU, a DSP and other hardware in combination with a memory, and can be installed in the base station as logical units.

### Embodiment 1

Step 301: when the current system uses the eICIC technology and the current subframe is the ABS, the scheduling queue of the current subframe is set up by using the specified UEs scheduled on the ABS, and/or all the UEs within the coverage area of the base station.

Step 302: the interference factor of each UE in the scheduling queue of the current subframe is determined by using the interference factor mapping rule.

It is assumed that an interference factor query is implemented by using the BLER. The UE with index 10, for example, is extracted from the scheduling queue of the current subframe and the UE is the specified UE accessing the ABS. Then, the BLER of the UE in the current subframe is obtained as 0.35, and the minimum BLER of the UE in the other schedulable subframes except the current subframe is obtained as 0.35. Thus, the difference is 0, and then it is found out from Table 1 according to the difference that the corresponding interference factor *FF_{Interferec e}* = 64.

**Table 1**

| ΔBLER | > 0.35 | 0.25∼0.35 | 0.15∼0.25 | 0.1∼0.15 | 0.05∼0.1 | 0∼0.05 | 0 |
|---|---|---|---|---|---|---|---|
| *FF_{Interferece}* | 1 | 2 | 4 | 8 | 16 | 32 | 64 |

When the interference factor query is implemented by using the packet loss ratio, the UE with index 10, for example, is extracted from the scheduling queue of the current subframe, and the UE is the specified UE accessing the ABS. Then, the packet loss ratio of the UE in the current subframe is obtained as 0.005, and the minimum packet loss ratio of the UE in the other schedulable subframes except the current subframe is obtained as 0.005. Thus, the difference is 0, and then it is found out from the interference factor mapping rule according to the difference of the packet loss ratio that the corresponding interference factor is 64.

When the interference factor query is implemented by using the interference measurement, the UE with index 10 is extracted from the scheduling queue of the current subframe, and the UE is the specified UE accessing the ABS. Then, the interference measurement of the UE in the current subframe is obtained, and the minimum interference measurement of the UE in the other schedulable subframes except the current subframe is obtained. Thus, the corresponding interference factor is found out from the interference factor mapping rule according to the difference of the interference measurement.

Step 303: the priority corresponding to each UE in the scheduling queue of the current subframe is calculated by using the interference factor of each UE according to a priority factor calculating formula.

The interference factor *FF_{Interferec e}* is added into the priority factor calculating formula to calculate a new sorting priority, which can be implemented by multiplying the interference factor *FF_{Interferec e}* by the original priority as the new priority.

Step 304: the UEs in the queue are sorted according to the priority corresponding to each UE.

Step 305: the resources are allocated to each UE in order according to the priority of each UE in the queue and service resource types (Guaranteed Bit Rate (GBR)/Priority Bit Rate (PBR)).

Here, there are two rounds of resource allocation. Specifically, in the first round, for the PBR of a GBR service and a NonGBR service, the resources are allocated according to the GBR/PBR and a Buffer Status Report (BSR) of the service, so as to guarantee the GBR/PBR of the service; in the second round, for the NonGBR service, according to the priority in the queue, the resources are allocated according to an Aggregate Maximum Bit Rate (AMBR) and the BSR of the service.

### Embodiment 2

Step 401: when the current system uses the eICIC technology and the current subframe is a non-ABS, the scheduling queue of the current subframe is set up by using all the UEs within the coverage area of the base station except the specified UE(s) scheduled on the ABS as the UEs required to be scheduled.

Step 402: the interference factor of each UE in the scheduling queue of the current subframe is calculated by using the interference factor mapping rule.

For example, the current subframe is the subframe 2 and the UE with index 12 is extracted from the scheduling queue of the current subframe. The BLER of the UE in the current subframe is obtained as 0.55, and the minimum BLER of the UE in the other schedulable subframes except the current subframe, namely the subframes 0, 1, 3, 4, 5, 6, 7, 8 and 9, is obtained as 0.1. Thus, the difference is 0.45, and then it is found out from Table 1 according to the difference that the corresponding interference factor *FF_{Interferec e}* = 1.

Step 403: the priority corresponding to each UE in the scheduling queue of the current subframe is calculated by using the interference factor of each UE according to the priority factor calculating formula.

The interference factor *FF_{Interferec e}* is added in the priority factor calculating formula to calculate the new sorting priority. The calculation is performed by adding the interference factor *FF_{Interferc e}* to the original priority to obtain the new priority.

Step 404: the UEs in the queue are sorted according to the priority corresponding to each UE.

Step 405: the resources are allocated to each UE in order according to the priority of each UE in the queue and the service resource types (GBR/PBR).

Here, there are two rounds of resource allocation. Specifically, in the first round, for the PBR of the GBR service and the NonGBR service, the resources are allocated according to the GBR/PBR and the BSR of the service, so as to guarantee the GBR/PBR of the service; in the second round, for the NonGBR service, according to the priority in the queue, the resources are allocated according to the AMBR and the BSR of the service.

### Embodiment 3

Step 501: when the current system does not use the eICIC technology, the scheduling queue of the current subframe is set up by using all the UEs within the coverage area of the base station as the UEs required to be scheduled.

Step 502: the interference factor of each UE in the scheduling queue of the current subframe is calculated by using the interference factor mapping rule.

For example, the current subframe is the subframe 0 and the UE with index 5 is extracted from the scheduling queue of the current subframe. The BLER of the UE in the current subframe is obtained as 0.1, and the minimum BLER of the UE in the other schedulable subframes except the current subframe, namely the subframes 1, 2, 3, 4, 5, 6, 7, 8 and 9, is obtained as 0.05. Thus, the difference is 0.05, and then it is found out from Table 1 according to the difference that the corresponding interference factor *_{FFInterferec e}* = 32.

Step 503: the priority corresponding to each UE in the scheduling queue of the current subframe is calculated by using the interference factor of each UE according to the priority factor calculating formula.

The interference factor *FF_{Interferec e}* is added in the priority factor calculating formula to calculate the new sorting priority. The calculation is performed by summing or multiplying the interference factor *FF_{Interferec e}* and the original priority in a weighting way to obtain the new priority.

Step 504: the UEs in the queue are sorted according to the priority corresponding to each UE.

Step 505: the resources are allocated to each UE in order according to the priority of each UE in the queue and the service resource types (GBR/PBR).

Here, there are two rounds of resource allocation. Specifically, in the first round, for the PBR of the GBR service and the NonGBR service, the resources are allocated according to the GBR/PBR and the BSR of the service, so as to guarantee the GBR/PBR of the service; in the second round, for the NonGBR service, according to the priority in the queue, the resources are allocated according to the AMBR and the BSR of the service.

The above is only the preferred embodiments of the disclosure and not intended to limit the scope of the claims of the disclosure.

## Claims

1. A method for scheduling resources, **characterized in that**, the method comprises:
calculating (101) an interference factor of each User Equipment (UE) in a scheduling queue of a current subframe by using an interference factor mapping rule;
calculating (102) a priority corresponding to each UE in the scheduling queue of the current subframe by using the interference factor of each UE; and
allocating (103) resources for each UE according to the priority corresponding to each UE in the scheduling queue of the current subframe.

2. The method according to claim 1, further comprising:
before calculating (101) the interference factor of each UE in the scheduling queue of the current subframe by using the interference factor mapping rule,
setting up (301, 401, 501) the scheduling queue of the current subframe by using UEs required to be scheduled in the current subframe.

3. The method according to claim 2, wherein the UEs required to be scheduled comprise:
all of UEs within a coverage area of a base station; or,
in the case that an Enhanced Inter-Cell Interference Coordination (eICIC) technology is used and the current subframe is an Almost Blank Subframe (ABS), specified UEs scheduled on the ABS, and/or all of UEs within a coverage area of a base station; or,
in the case that an eICIC technology is used and the current subframe is a non-ABS, all of UEs within a coverage area of a base station except specified UEs scheduled on an ABS.

4. The method according to claim 3, wherein the step of calculating (101) the interference factor of each UE in the scheduling queue of the current subframe by using the interference factor mapping rule comprises:
extracting each UE in the scheduling queue of the current subframe, and extracting the interference factor of each UE from the interference factor mapping rule according to a difference between quality information of each UE in the current subframe and selected quality information of each UE in schedulable subframes except the current subframe.

5. The method according to claim 4, wherein the schedulable subframes except the current subframe are:
all the other ABSs except the current subframe when the UE is a specified UE scheduled on the ABS; and
all the other subframes except the current subframe when the UE is not the specified UE scheduled on the ABS.

6. The method according to claim 4, wherein the interference factor mapping rule comprises:
one or more ranges of a Block Error Ratio (BLER) difference, and one or more interference factors respectively corresponding to the one or more ranges of the BLER difference; or,
one or more ranges of a packet loss ratio difference, and one or more interference factors respectively corresponding to the one or more ranges of the packet loss ratio difference; or,
one or more ranges of an interference measurement difference, and one or more interference factors respectively corresponding to the one or more ranges of the interference measurement difference.

7. The method according to claim 1, wherein the step of calculating (102) the priority corresponding to each UE in the scheduling queue of the current subframe by using the interference factor of each UE comprises:
performing calculation with an original priority of each UE in the scheduling queue of the current subframe and the interference factor of each UE to obtain the priority corresponding to each UE.

8. An apparatus for scheduling resources, **characterized in that** the apparatus comprises: an interference factor calculating module (21), a priority calculating module (22) and a scheduling module (23),
wherein the interference factor calculating module (21) is configured to calculate an interference factor of each User Equipment (UE) in a scheduling queue of a current subframe by using an interference factor mapping rule, and send the interference factor of each UE in the scheduling queue of the current subframe to the priority calculating module (22);
wherein the priority calculating module (22) is configured to calculate a priority corresponding to each UE in the scheduling queue of the current subframe by using the interference factor of each UE which is sent from the interference factor calculating module (21), and send the priority corresponding to each UE in the scheduling queue of the current subframe to the scheduling module (23); and
wherein the scheduling module (23) is configured to allocate resources for each UE according to the priority corresponding to each UE in the scheduling queue of the current subframe which is sent from the priority calculating module (22).

9. The apparatus according to claim 8, wherein
the interference factor calculating module (21) is configured to set up the scheduling queue of the current subframe by using the UEs required to be scheduled in the current subframe, and
wherein the UEs required to be scheduled are all of UEs within a coverage area of a base station; or,
in the case that an Enhanced Inter-Cell Interference Coordination (eICIC) technology is used and the current subframe is an Almost Blank Subframe (ABS), the UEs required to be scheduled are specified UEs scheduled on the ABS, and/or all of UEs within a coverage area of a base station; or,
in the case that the eICIC technology is used and the current subframe is a non-ABS, the UEs required to be scheduled are all of UEs within a coverage area of a base station except specified UEs scheduled on an ABS.

10. The apparatus according to claim 9, wherein
the interference factor calculating module (21) is configured to extract each UE in the scheduling queue of the current subframe, and extract the interference factor of each UE from the interference factor mapping rule according to a difference between quality information of each UE in the current subframe and selected quality information of each UE in schedulable subframes except the current subframe.

11. The apparatus according to claim 10, wherein
the interference factor calculating module (21) is configured to store the interference factor mapping rule;
wherein the interference factor mapping rule comprises:
one or more ranges of a Block Error Ratio (BLER) difference, and one or more interference factors respectively corresponding to the one or more ranges of the BLER difference; or,
one or more ranges of a packet loss ratio difference, and one or more interference factors respectively corresponding to the one or more ranges of the packet loss ratio difference; or,
one or more ranges of an interference measurement difference, and one or more interference factors respectively corresponding to the one or more ranges of the interference measurement difference.

12. The apparatus according to claim 8, wherein
the priority calculating module (22) is configured to perform calculation with an original priority of each UE in the scheduling queue of the current subframe and the interference factor of each UE to obtain the priority corresponding to each UE.

## Patentansprüche

1. Verfahren zur Disposition von Ressourcen, **dadurch gekennzeichnet, dass** das Verfahren umfasst:
Berechnen (101) eines Störfaktors jeder Benutzereinrichtung (UE) in einer Dispositionswarteschlange eines aktuellen Unterrahmens durch Verwenden einer Störfaktorzuordnungsregel;
Berechnen (102) einer Priorität, die jeder UE in der Dispositionswarteschlange des aktuellen Unterrahmens entspricht, durch Verwenden des Störfaktors jeder UE; und
Zuweisen (103) von Ressourcen für jede UE gemäß der Priorität, die jeder UE in der Dispositionswarteschlange des aktuellen Unterrahmens entspricht.

2. Verfahren nach Anspruch 1, ferner umfassend:
vor dem Berechnen (101) des Störfaktors jeder Benutzereinrichtung (UE) in der Dispositionswarteschlange des aktuellen Unterrahmens durch Verwenden der Störfaktorzuordnungsregel:
Aufbauen (301, 401, 501) der Dispositionswarteschlange des aktuellen Unterrahmens durch Verwenden von UEs, die im aktuellen Unterrahmen disponiert werden müssen.

3. Verfahren nach Anspruch 2, wobei die UEs, die disponiert werden müssen, umfassen:
alle UEs innerhalb eines Versorgungsbereichs einer Basisstation; oder,
falls eine Technologie einer verbesserten Störungskoordination zwischen Zellen (eICIC) verwendet wird und der aktuelle Unterrahmen ein beinahe leerer Unterrahmen (ABS) ist, spezifizierte UEs, die auf dem ABS disponiert werden, oder alle UEs innerhalb eines Versorgungsbereichs einer Basisstation; oder
falls eine eICIC-Technologie verwendet wird, und der aktuelle Unterrahmen ein Nicht-ABS ist, alle UEs innerhalb eines Versorgungsbereichs einer Basisstation mit Ausnahme von spezifizierten UEs, die auf einem ABS disponiert werden.

4. Verfahren nach Anspruch 3, wobei der Schritt des Berechnens (101) des Störfaktors jeder Benutzereinrichtung (UE) in der Dispositionswarteschlange des aktuellen Unterrahmens durch Verwenden einer Störfaktorzuordnungsregel umfasst:
Extrahieren jeder UE in der Dispositionswarteschlange des aktuellen Unterrahmens und Extrahieren des Störfaktors jeder UE aus der Störfaktorzuordnungsregel gemäß einer Differenz zwischen Qualitätsinformationen jeder UE im aktuellen Unterrahmen und ausgewählten Qualitätsinformationen jeder UE in disponierbaren Unterrahmen außer dem aktuellen Unterrahmen.

5. Verfahren nach Anspruch 4, wobei die disponierbaren Unterrahmen außer dem aktuellen Unterrahmen sind:
alle anderen ABSs außer dem aktuellen Unterrahmen, wenn die UE eine spezifizierte UE ist, die auf dem ABS disponiert wird; und
alle anderen Unterrahmen außer dem aktuellen Unterrahmen, wenn die UE nicht eine spezifizierte UE ist, die auf dem ABS disponiert wird.

6. Verfahren nach Anspruch 4, wobei die Störfaktorzuordnungsregel umfasst:
einen oder mehrere Bereiche einer Blockfehlerraten (BLER)-Differenz und einen oder mehrere Störfaktoren, die jeweils dem einen oder den mehreren Bereichen der BLER-Differenz entsprechen; oder
einen oder mehrere Bereiche einer Paketverlustratendifferenz und einen oder mehrere Störfaktoren, die jeweils dem einen oder den mehreren Bereichen der Paketverlustratendifferenz entsprechen; oder
einen oder mehrere Bereiche einer Störungsmessungsdifferenz und einen oder mehrere Störfaktoren, die jeweils dem einen oder den mehreren Bereichen der Störungsmessungsdifferenz entsprechen.

7. Verfahren nach Anspruch 1, wobei der Schritt des Berechnens (102) der Priorität, die jeder Benutzereinrichtung (UE) in der Dispositionswarteschlange des aktuellen Unterrahmens entspricht, durch Verwenden des Störfaktors jeder UE umfasst:
Durchführen einer Berechnung mit einer ursprünglichen Priorität jeder UE in der Dispositionswarteschlange des aktuellen Unterrahmens und dem Störfaktor jeder UE, um die Priorität zu erhalten, die jeder UE entspricht.

8. Vorrichtung zum Disponieren von Ressourcen, **dadurch gekennzeichnet, dass** die Vorrichtung umfasst: ein Störfaktorberechnungsmodul (21) ein Prioritätsberechnungsmodul (22) und ein Disponiermodul (23),
wobei das Störfaktorberechnungsmodul (21) so konfiguriert ist, dass es einen Störfaktor jeder Benutzereinrichtung (UE) in einer Dispositionswarteschlange eines aktuellen Unterrahmens durch Verwenden einer Störfaktorzuordnungsregel berechnet und den Störfaktor jeder UE in der Dispositionswarteschlange des aktuellen Unterrahmens an das Prioritätsberechnungsmodul (22) sendet;
wobei das Prioritätsberechnungsmodul (22) so konfiguriert ist, dass es eine Priorität, die jeder UE in der Dispositionswarteschlange des aktuellen Unterrahmens entspricht, durch Verwenden des Störfaktors jeder UE berechnet, der vom Störfaktorberechnungsmodul (21) gesendet wird, und die Priorität, die jeder UE in der Dispositionswarteschlange des aktuellen Unterrahmens entspricht, an das Disponiermodul (23) sendet; und
wobei das Disponiermodul (23) so konfiguriert ist, dass es Ressourcen für jede UE gemäß der Priorität zuweist, die jeder UE in der Dispositionswarteschlage des aktuellen Unterrahmens entspricht und vom Prioritätsberechnungsmodul (22) gesendet wird.

9. Vorrichtung nach Anspruch 8, wobei
das Störfaktorberechnungsmodul (21) so konfiguriert ist, dass es die Dispositionswarteschlange des aktuellen Unterrahmens durch Verwenden von UEs aufbaut, die im aktuellen Unterrahmen disponiert werden müssen, und
wobei die UEs, die disponiert werden müssen, alle UEs innerhalb eines Versorgungsbereichs einer Basisstation sind; oder,
falls eine Technologie einer verbesserten Störungskoordination zwischen Zellen (eICIC) verwendet wird und der aktuelle Unterrahmen ein beinahe leerer Unterrahmen (ABS) ist, die UEs, die disponiert werden müssen, spezifizierte UEs, die auf dem ABS disponiert werden, oder alle UEs innerhalb eines Versorgungsbereichs einer Basisstation sind; oder,
falls die eICIC-Technologie verwendet wird, und der aktuelle Unterrahmen ein Nicht-ABS ist, die UEs, die disponiert werden müssen, alle UEs innerhalb eines Versorgungsbereichs einer Basisstation mit Ausnahme von spezifizierten UEs sind, die auf einem ABS disponiert werden.

10. Vorrichtung nach Anspruch 9, wobei
das Störfaktorberechnungsmodul (21) so konfiguriert ist, dass es jede UE in der Dispositionswarteschlange des aktuellen Unterrahmens extrahiert, und den Störfaktor jeder UE aus der Störfaktorzuordnungsregel gemäß einer Differenz zwischen Qualitätsinformationen jeder UE im aktuellen Unterrahmen und ausgewählten Qualitätsinformationen jeder UE in disponierbaren Unterrahmen außer dem aktuellen Unterrahmen extrahiert.

11. Vorrichtung nach Anspruch 10, wobei
das Störfaktorberechnungsmodul (21) zum Speichern der Störfaktorzuordnungsregel konfiguriert ist;
wobei die Störfaktorzuordnungsregel umfasst:
einen oder mehrere Bereiche einer Blockfehlerraten (BLER)-Differenz und einen oder mehrere Störfaktoren, die jeweils dem einen oder den mehreren Bereichen der BLER-Differenz entsprechen; oder
einen oder mehrere Bereiche einer Paketverlustratendifferenz und einen oder mehrere Störfaktoren, die jeweils dem einen oder den mehreren Bereichen der Paketverlustratendifferenz entsprechen; oder
einen oder mehrere Bereiche einer Störungsmessungsdifferenz und einen oder mehrere Störfaktoren, die jeweils dem einen oder den mehreren Bereichen der Störungsmessungsdifferenz entsprechen.

12. Vorrichtung nach Anspruch 8, wobei
das Prioritätsberechnungsmodul (22) so konfiguriert ist, dass es eine Berechnung mit einer ursprünglichen Priorität jeder UE in der Dispositionswarteschlange des aktuellen Unterrahmens und dem Störfaktor jeder UE durchführt, um die Priorität zu erhalten, die jeder UE entspricht.

## Revendications

1. Procédé pour planifier des ressources, **caractérisé en ce que** le procédé comprend :
le calcul (101) d'un facteur d'interférence de chaque équipement d'utilisateur (UE) dans une file d'attente de planification d'une sous-trame actuelle en utilisant une règle de mappage de facteur d'interférence ;
le calcul (102) d'une priorité correspondant à chaque UE dans la file d'attente de planification de la sous-trame actuelle en utilisant le facteur d'interférence de chaque UE ; et
l'attribution (103) de ressources pour chaque UE conformément à la priorité correspondant à chaque UE dans la file d'attente de planification de la sous-trame actuelle.

2. Procédé selon la revendication 1, comprenant en outre :
avant le calcul (101) du facteur d'interférence de chaque UE dans la file d'attente de planification de la sous-trame actuelle en utilisant la règle de mappage de facteur d'interférence,
la configuration (301, 401, 501) de la file d'attente de planification de la sous-trame actuelle en utilisant les UE devant être planifiés dans la sous-trame actuelle.

3. Procédé selon la revendication 2, dans lequel les UE devant être planifiés comprennent :
tous les UE dans les limites d'une zone de couverture d'une station de base ; ou
dans le cas où une technologie de coordination d'interférence entre cellules améliorée (eICIC) est utilisée et où la sous-trame actuelle est une sous-trame presque vide (ABS), les UE spécifiés planifiées sur l'ABS, et/ou tous les UE dans les limites d'une zone de couverture d'une station de base ; ou
dans le cas où une technologie eICIC est utilisée et où la sous-trame actuelle n'est pas une ABS, tous les UE dans les limites d'une zone de couverture d'une station de base à l'exception des UE spécifiés planifiés sur une ABS.

4. Procédé selon la revendication 3, dans lequel l'étape de calcul (101) du facteur d'interférence de chaque UE dans la file d'attente de planification de la sous-trame actuelle en utilisant la règle de mappage de facteur d'interférence comprend :
l'extraction de chaque UE de la file d'attente de planification de la sous-trame actuelle, et l'extraction du facteur d'interférence de chaque UE de la règle de mappage de facteur d'interférence conformément à une différence entre les informations de qualité de chaque UE dans la sous-trame actuelle et les informations de qualité sélectionnées de chaque UE dans des sous-trames planifiables à l'exception de la sous-trame actuelle.

5. Procédé selon la revendication 4, dans lequel les sous-trames planifiables à l'exception de la sous-trame actuelle sont :
toutes les autres ABS à l'exception de la sous-trame actuelle lorsque l'UE est un UE spécifié planifié sur l'ABS ; et
toutes les autres sous-trames à l'exception de la sous-trame actuelle lorsque l'UE n'est pas l'UE spécifié planifié sur l'ABS.

6. Procédé selon la revendication 4, dans lequel la règle de mappage de facteur d'interférence comprend :
une ou plusieurs plages d'une différence de taux d'erreur sur bloc (BLER), et un ou plusieurs facteurs d'interférence correspondant respectivement auxdites une ou plusieurs plages de la différence de BLER ; ou
une ou plusieurs plages d'une différence de rapport de perte de paquet, et un ou plusieurs facteurs d'interférence correspondant respectivement auxdites une ou plusieurs plages de la différence de rapport de perte de paquet ; ou
une ou plusieurs plages d'une différence de mesure d'interférence, et un ou plusieurs facteurs d'interférence correspondant respectivement auxdites une ou plusieurs plages de la différence de mesure d'interférence.

7. Procédé selon la revendication 1, dans lequel l'étape de calcul (102) de la priorité correspondant à chaque UE dans la file d'attente de planification de la sous-trame actuelle en utilisant le facteur d'interférence de chaque UE comprend :
l'exécution du calcul avec une priorité d'origine de chaque UE dans la file d'attente de planification de la sous-trame actuelle et le facteur d'interférence de chaque UE pour obtenir la priorité correspondant à chaque UE.

8. Appareil pour planifier des ressources, **caractérisé en ce que** l'appareil comprend : un module de calcul de facteur d'interférence (21), un module de calcul de priorité (22) et un module de planification (23),
dans lequel le module de calcul de facteur d'interférence (21) est configuré pour calculer un facteur d'interférence de chaque équipement d'utilisateur (UE) dans une file d'attente de planification d'une sous-trame actuelle en utilisant une règle de mappage de facteur d'interférence, et pour envoyer le facteur d'interférence de chaque UE dans la file d'attente de planification de la sous-trame actuelle au module de calcul de priorité (22) ;
dans lequel le module de calcul de priorité (22) est configuré pour calculer une priorité correspondant à chaque UE dans la file d'attente de planification de la sous-trame actuelle en utilisant le facteur d'interférence de chaque UE qui est envoyé par le module de calcul de facteur d'interférence (21), et pour envoyer la priorité correspondant à chaque UE dans la file d'attente de planification de la sous-trame actuelle au module de planification (23) ; et
dans lequel le module de planification (23) est configuré pour attribuer des ressources pour chaque UE conformément à la priorité correspondant à chaque UE dans la file d'attente de planification de la sous-trame actuelle qui est envoyée par le module de calcul de priorité (22).

9. Appareil selon la revendication 8, dans lequel
le module de calcul de facteur d'interférence (21) est configuré pour configurer la file d'attente de planification de la sous-trame actuelle en utilisant les UE devant être planifiés dans la sous-trame actuelle, et
dans lequel les UE devant être planifiés sont tous les UE dans les limites d'une zone de couverture d'une station de base ; ou
dans le cas où une technologie de coordination d'interférence entre cellules améliorée (eICIC) est utilisée et où la sous-trame actuelle est une sous-trame presque vide (ABS), les UE devant être planifiés sont les UE spécifiés planifiés sur l'ABS, et/ou tous les UE dans les limites d'une zone de couverture d'une station de base ; ou
dans le cas où la technologie eICIC est utilisée et où la sous-trame actuelle n'est pas une ABS, les UE devant être planifiés sont tous les UE dans les limites d'une zone de couverture d'une station de base à l'exception des UE spécifiés planifiés sur une ABS.

10. Appareil selon la revendication 9, dans lequel
le module de calcul de facteur d'interférence (21) est configuré pour extraire chaque UE de la file d'attente de planification de la sous-trame actuelle, et extraire le facteur d'interférence de chaque UE de la règle de mappage de facteur d'interférence conformément à une différence entre les informations de qualité de chaque UE dans la sous-trame actuelle et les informations de qualité sélectionnées de chaque UE dans des sous-trames planifiables à l'exception de la sous-trame actuelle.

11. Appareil selon la revendication 10, dans lequel
le module de calcul de facteur d'interférence (21) est configuré pour mémoriser la règle de mappage de facteur d'interférence ;
dans lequel la règle de mappage de facteur d'interférence comprend :
une ou plusieurs plages d'une différence de taux d'erreur sur bloc (BLER), et un ou plusieurs facteurs d'interférence correspondant respectivement auxdites une ou plusieurs plages de la différence de BLER ; ou
une ou plusieurs plages d'une différence de rapport de perte de paquet, et un ou plusieurs facteurs d'interférence correspondant respectivement auxdites une ou plusieurs plages de la différence de rapport de perte de paquet ; ou
une ou plusieurs plages d'une différence de mesure d'interférence, et un ou plusieurs facteurs d'interférence correspondant respectivement auxdites une ou plusieurs plages de la différence de mesure d'interférence.

12. Appareil selon la revendication 8, dans lequel
le module de calcul de priorité (22) est configuré pour effectuer un calcul avec une priorité d'origine de chaque UE dans la file d'attente de planification de la sous-trame actuelle et le facteur d'interférence de chaque UE pour obtenir la priorité correspondant à chaque UE.
